# EUROPEAN PATENT SPECIFICATION

(11) **EP 0 537 743 B1**
(45) Date of publication and mention of the grant of the patent: **02.01.1997**
(21) Application number: 92117638.4
(22) Date of filing: 15.10.1992
(51) Int. Cl.: H04L 12/56, H04Q 11/04

(54) **Switching method for a common memory based switching field and the switching field**
Vermittlungsverfahren und Koppelfeldeinrichtung mit einem gemeinsamen Pufferspeicher
Procédé de commutation et commutateur ayant une mémoire commune

(30) Priority: 18.10.1991 FI 914931
(43) Date of publication of application: 21.04.1993
(73) Proprietor: OY NOKIA AB, 00100 Helsinki (FI)
(72) Inventor: Almay, Heikki-Stefan, SF-00130 Helsinki (FI)
(74) Representative: Schroeter, Helmut

(56) References cited:
- EP-A- 0 338 558
- IEEE JOURNAL ON SELECTED AREAS IN COMMUNICATIONS vol. 6, no. 9, December 1988, US pages 1528 - 1537 , XP112418 M. DEVAULT ET AL
- INT. SWITCHING SYMPOSIUM 90 vol. 5, May 1990, SE pages 1 - 8 , XP130918 M. HENRION ET AL

## Description

The present invention pertains to a switching method for a common memory based switching field and to the switching field. In the method (i) a plurality of input gates receive cells, each comprising a header and a payload portion; (ii) the header and the payload portion of a cell arriving at the switching field are separated from each other, whereby the header conversion operations required for the next link are performed in respect of the header, and the payload portion is written to a common memory; and (iii) each cell is transmitted via one or more output gates to one or more output lines.

The need for broadband information transfer constantly increases in public networks. The high speed of a broadband integrated services network, such as B-ISDN (Broadband Integrated Services Digital Network), where voice, image and text are transferred, requires an effective and simple network protocol. The Asynchronous Transfer Mode (ATM) is generally considered the best alternative, because it enables transmission of both interactive and distribution services at the maximal transmission rate of the network or at any lower rate. The asynchronous mode is based on asynchronous time division channelling, in which information is transferred in packets of predetermined length, called cells. Owing to the above features, the preferred embodiment of the present invention is an ATM switching field.

The independently functioning basic part of an ATM switching field is a switching block, which carries out the actual switching. By increasing the size of one switching block in the switching field, the number of switching blocks required in the switching field may be reduced, and the apparatus may thus be made simpler. Owing to high transmission rates, one switching block must however be very fast. In common memory based switching fields, the size of a switching block is limited by the speed of writing to and reading from the memory. In the worst case, one cell is to be written to the common memory from each input line and one cell to each output line during the time taken for one cell to arrive from the input line.

The description of the prior art in U.S. patent 4,947,388 sets forth an ATM switching field which, similarly to the present invention, is based on a common memory and which comprises 32 input lines and 32 output lines. Each incoming ATM cell is divided into a header and a payload portion. The payload portion is written to a buffer memory storage location corresponding to the input line. The header is applied to a conversion circuit, which gives the routing information of the header, e.g. the number of the output line and the logical channel number. The latter is obtained from the output of the conversion circuit synchronised with the writing of the payload portion to the memory, and is written to the buffer memory together with the payload portion. The address of the buffer memory where the payload portion and the logical channel number are written is applied to a group of 32 output queues and stored into one of these (into the queue indicated by the conversion circuit). Each output queue corresponds to one output line, and the payload portions and logical channel numbers (cells) corresponding to the output lines are read successively from the buffer memory, from storage locations indicated by the output queues. From the output of the buffer memory (where the cells are in multiplex form) the cells are switched via a demultiplexor to their own output lines.

The drawback of the above switching field structure relates to the speed problem described above. Since the logical channel number is written to the buffer memory together with the payload portion, the payload portion has to wait the time of the header conversion before it may be stored into the buffer memory. This shortens the time available for writing cells to the memory, whereby the largest possible number of gates is reduced. Alternatively, the solution requires longer buffering of the cells before writing to the memory, which in turn increases the quantity of apparatus and the delay caused by the field.

An article by M. Devault et al., published in "IEEE Journal on selected areas in communications", vol. 6, no. 9, December 1988 (pages 1528-1537), discloses another common memory based switching field, which suffers from similar problems.

The object of the present invention is thus to optimise the practical devices so that an improved result is achieved with the existing technique, in other words a faster switching time and, consequently, a larger number of gates for a switching block. This is achieved with the method of the invention, which is characterised in that packets consisting of a new header obtained from the header conversion and a common memory address of the payload are switched to a time-shared bus which routes each packet to output buffers in a manner known per se, and that when each cell is to be transmitted, a corresponding payload portion is read from the common memory, said payload portion and said new header are combined into a new cell, and the new cell is transmitted to said one or more output lines. The switching field of the invention for its part is characterised by what is described in the characterising portion of accompanying claim 3.

The basic concept of the invention is to use distributed switching between the time-shared bus and the common memory, in such a manner that the switching itself is carried out with a packet which is considerably shorter than a normal ATM cell and which consists of the new header of the cell and the common memory address of the payload portion, by means of a time-shared bus, whereby writing of the payload portion of the cell to the common memory is carried out concurrently with the header operations and the switching, and that the cell will be reconstructed when it is to be transmitted to the output line.

The solution of the invention speeds up the switching, and this increases the largest possible number of gates. The time-consuming handling of the header separate from the common memory increases the time available for writing to the common memory, which also increases the largest possible number of gates. As an alternative to increasing the number of gates, the parallelism may be reduced, which often makes the practical solution simpler.

Since the solution utilises the common memory, the required number of block buffers is reduced. Even though the switching field of the invention is logically output-buffered, the required number of buffers is not large: since the payload portion is separate in the common memory, short packets are buffered in the output (approx. 15% of an entire ATM cell).

Carrying out the header operations of the cell in parallel with the writing of the payload to the common memory also reduces the delay caused by the switching field, and this reduces the need for buffering. Shortening of the delay is essential when interactive services such as a video conference or high-quality viewphone service are to be provided.

In the following the invention and its preferred embodiments are described in more detail with reference to the examples of the accompanying drawing wherein
Figure 1 shows the structure of an ATM cell, and
Figure 2 is a block diagram of an ATM switching field of the invention.

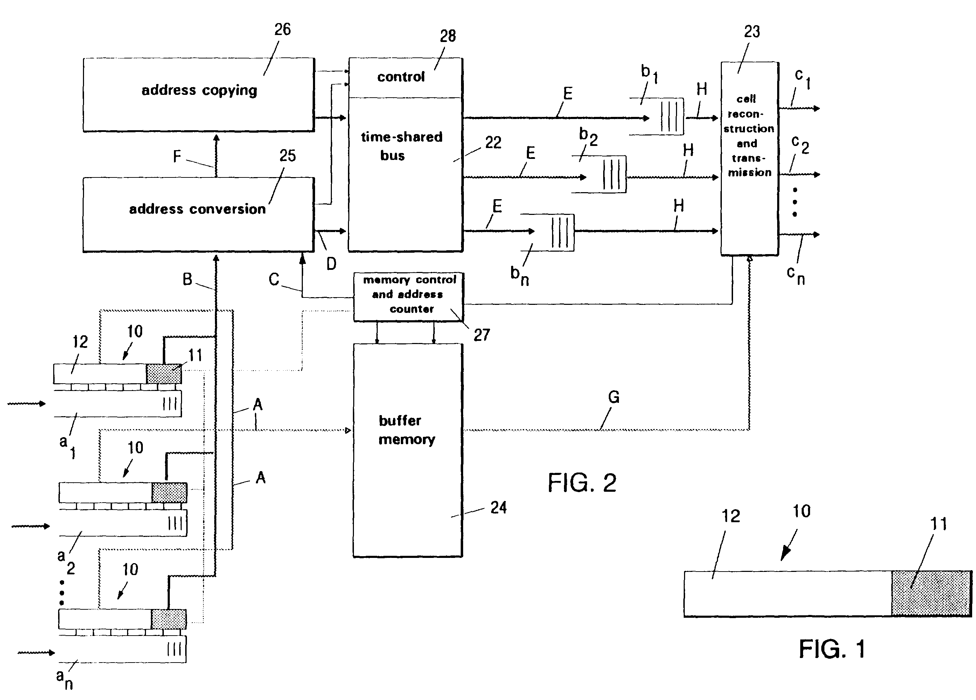

An ATM cell 10 illustrated in Figure 1 consists of a header 11 and a payload portion 12. The header is specific for each link, and it indicates e.g. the virtual channel and bus to be used. When a cell is transmitted via the switching field to another connection, it must be designated a new header, which is assigned for said new connection. The cell, as well as the header and payload portion contained therein, are each of fixed length, but the measures may vary from one system to another. The Consultative Committee for International Telephone and Telegraph, CCITT, has however agreed that the header has a length of 5 bytes and the payload portion a length of 48 bytes.

Figure 2 is a block diagram of an ATM switching field of the invention. The field comprises n input gates a₁...aₙ, each comprising a specific input buffer. ATM cells 10 of Figure 1 arrive from the input lines at the input gates in a manner known per se. The input gates are connected to both a time-shared bus 22 and a common memory 24 which is connected in parallel with said time-shared bus. Said time-shared bus 22 carries out routing to output buffers b₁...bₙ, which are connected via a reconstruction circuit 23 to output gates c₁...cₙ. The use of a time-shared bus as a switching block is known per se and described e.g. in references [1] and [2] (a list of references can be found at the end of the specification). Switching from the input gates to the time-shared bus 22 takes place via a header conversion circuit 25, and in the case of distribution traffic (described further below), also through an address-copying circuit 26. In addition, the switching field comprises a memory control and address counter circuit 27. The control element of the time-shared bus is also illustrated as a separate block, indicated by the numeral 28.

A normal switching (point-to-point) is performed in the switching field as follows. When the ATM cell 10 arrives at one of the input gates, said memory control and address counter circuit 27 contains an indication of available storage locations of the common memory 24. At said input gate the payload portion 12 is separated from the cell 10 and is written, controlled by said circuit 27, to an available storage location of the common memory 24. This operation is illustrated by arrows A. Handling of the header 11 of the cell is started simultaneously with the writing to the memory by applying the header (arrows B) to the header conversion circuit 25, where the known address conversion required for the next link and other possible header operations known per se are performed in respect of the address of the header. The common memory address of the payload portion obtained from the memory control and address counter circuit 27 is added to the new header thus obtained (arrow C). A packet consisting of the new header and said common memory address is written to the input of the time-shared bus 22 (arrow D). The time-shared bus 22 routes said packet in a manner known per se (c.f. e.g. reference [1]) to an output buffer b1...bn (arrows E) corresponding to the output line in question. When said cell is to be transmitted, the corresponding payload portion 12 is fetched from the common memory 24 on the basis of the common memory address (arrow G) and the corresponding new header is fetched from the output buffer to the reconstruction circuit 23 (arrows H). In the reconstruction circuit the new header and the payload portion are reconstructed as a new ATM cell, and said cell is written to the corresponding output line via an output gate determined by the new header. The reconstruction of the cell thus takes place in connection with the transmission of said cell.

Routing of a packet consisting of the header of an ATM cell and the memory address of the payload is considerably faster than routing of a complete, clearly longer ATM cell. This increases the largest possible number of gates. Alternatively, the number of parallel operations may be reduced, which makes the practical realisation simpler.

Distribution traffic (copying of cells, point-to-multipoint) takes place in such a manner that in connection with the header conversion the header is discovered by the header conversion circuit 25 to belong to a distribution connection (1 bit in the conversion table). As a result, the header is written to an address-copying circuit 26 (arrow F), which performs the same operations as the header conversion circuit, yet so that a plurality of outgoing addresses are made from one incoming address, all containing a reference to the same common memory address. The packets of the distribution traffic are guided to the time-shared bus 22 when the header conversion circuit 25 has no header to offer or the header handled by it is intended for the address-copying circuit.

Even if the invention was described in the foregoing with reference to the example illustrated by the accompanying drawing, it is clear that the invention is not limited thereby but may be modified in many ways within the scope of the enclosed claims. Therefore, even if the above example concerns an ATM switching field, a similar concept may be used in conventional packet-switching systems as well. The ATM-specific terms used are thus to be understood in a larger sense. For instance, by a cell is meant in a more general sense a packet.

### References cited:

[1] De Prycker M., Bauwens J.: A Switching Exchange for an Asynchronous Time Division based Network, International Conference on Communications 1987, 7-10 July 1987, Seattle, Washington, USA, p. 774-781
[2] Pöntinen Juha: Switching network structure in the Broadcast Integrated Services Digital Network. Master's thesis, University of Technology, Laboratory of Telecommunication Switching and Information Technology, Espoo 1989.

## Claims

1. A switching method for a common memory based switching field, wherein
- a plurality of input gates (a₁...aₙ) receive cells (10), each comprising a header (11) and a payload portion (12);
- the header (11) and the payload portion (12) of a cell (10) arriving at the switching field are separated from each other, whereby header conversion operations required to extract routing information for the next link are performed in respect of the header (11), and the payload portion (12) is written to a common memory (24); and
- each cell (10) is transmitted via one or more output gates (c₁...cₙ) to one or more output lines, **characterised** in that packets, consisting of a new header obtained from the header conversion and of the common memory address in which the payload portion (12) was written, are switched to a time-shared bus (22), connected in parallel with the common memory (24), which routes each packet to output buffers (b₁...bₙ) in a manner known per se, and that when each cell is to be transmitted, a corresponding payload portion (12) is read from the common memory (24) on the basis of the common memory address, said payload portion (12) and said new header are combined into a new cell, and the new cell is transmitted to said one or more output lines.

2. A method according to claim 1, **characterised** in that a packet consisting of the new header obtained by the header conversion and the memory address of the payload (12) is switched to the time-shared bus (22) from an address-copying circuit (26) where copying of one incoming address into a plurality of outgoing addresses is performed in addition to the header conversion operations, whereby a plurality of packets, all having the same common memory address, are switched to the time-shared bus (22) for one incoming cell.

3. A switching field comprising
- a plurality of input gates (a₁...aₙ₎, which receive cells (10), each comprising a header (11) and a payload portion (12);
- a plurality of output gates (c₁...cₙ), through which said cells are transmitted to one or more output lines;
- header conversion means (25) for conversion of the header (11) of an incoming cell (10) in order to extract routing information for the next link; and
- a common memory (24) for storing the payload portion (12) of the cell (10), **characterised** in that a known time-shared bus (22) is connected in parallel with said common memory (24) so that packets, consisting of the converted header for the next link of the cell and of the common memory address in which the payload portion (12) was written, are routed therethrough to output buffers (b₁..._{b}n), and that the switching field further comprises means (23), connected with the output buffers, for making up a new cell by combining said converted header and payload portion (12) of the cell which is read from the common memory (24) on the basis of the common memory address and for subsequently transmitting said new cell to said one or more output lines.

## Patentansprüche

1. Schaltverfahren für ein auf einem gemeinsamen Speicher basierendes Schaltfeld, wobei
- mehrere Eingangsgatter (a₁ ... aₙ) Zellen (10) aufnehmen, die jeweils einen Kopfteil (11) und einen nutzbaren Abschnitt (12) aufweisen;
- der Kopfteil (11) und der nutzbare Abschnitt (12) einer an dem Schaltfeld ankommenden Zelle (10) voneinander getrennt werden, wodurch Kopfteilkonvertierungsvorgänge, die dazu benötigt werden, eine Leitweginformation für die nächste Verbindung zu gewinnen, in bezug auf den Kopfteil (11) ausgeführt werden, und der nutzbare Abschnitt (12) wird in einen gemeinsamen Speicher (24) geschrieben; und
- jede Zelle (10) über eines oder mehrere Ausgangsgatter (c₁ ... cₙ) an eine oder mehrere Ausgangsleitungen übertragen wird,
**dadurch gekennzeichnet**, daß Pakete, die aus einem von der Kopfteilkonvertierung erhaltenen neuen Kopfteil und aus der gemeinsamen Speicheradresse bestehen, in die der nutzbare Abschnitt (12) geschrieben wurde, auf einen zeitgestaffelten Bus (22) geschaltet werden, der parallel zu dem gemeinsamen Speicher (24) angeschlossen ist und der jedes Paket in einer an sich bekannten Art und Weise zu Ausgangspuffern (b₁ ... bₙ) leitet, und daß, wenn jede Zelle übertragen werden soll, ein entsprechender nutzbarer Abschnitt (12) von dem gemeinsamen Speicher (24) auf der Basis der gemeinsamen Speicheradresse gelesen wird, wobei der nutzbare Abschnitt (12) und der neue Kopfteil zu einer neuen Zelle kombiniert werden, und die neue Zelle wird an die eine oder die mehreren Ausgangsleitungen übertragen.

2. Verfahren nach Anspruch 1, **dadurch gekennzeichnet**, daß ein Paket, das aus dem durch die Kopfteilkonvertierung erhaltenen neuen Kopfteil und der Speicheradresse der Nutzlast (12) besteht, von einer Adressenkopierschaltung (26), wo ein Kopieren einer hereinkommenden Adresse in mehrere ausgehende Adressen zusätzlich zu den Kopfteilkonvertierungsoperationen durchgeführt wird, zu dem zeitgestaffelten Bus (22) geschaltet wird, wodurch mehrere Pakete, die alle die gleiche gemeinsame Speicheradresse haben, für eine hereinkommende Zelle zu dem zeitgestaffelten Bus (22) geschaltet werden.

3. Schaltfeld mit folgenden Merkmalen:
- mehrere Eingangsgatter (a₁ ... aₙ), die Zellen (10) aufnehmen, die jeweils einen Kopfteil (11) und einen nutzbaren Abschnitt (12) aufweisen;
- mehrere Ausgangsgatter (c₁ ... cₙ), durch die die Zellen an eine oder mehrere Ausgangsleitungen übertragen werden;
- Kopfteilkonvertierungseinrichtungen (25) zur Konvertierung des Kopfteils (11) einer hereinkommenden Zelle (10) um eine Leitweginformation für die nächste Verbindung zu gewinnen; und
- einen gemeinsamen Speicher (24) zum Speichern des nutzbaren Abschnitts (12) der Zelle (10),
**dadurch gekennzeichnet**, daß ein bekannter zeitgestaffelter Bus (22) parallel zu dem gemeinsamen Speicher (24) angeschlossen ist, so daß Pakete, die aus dem konvertierten Kopfteil für die nächste Verbindung der Zelle und aus der gemeinsamen Speicheradresse, in die der nutzbare Abschnitt (12) geschrieben wurde, bestehen, durch diesen hindurch zu Ausgangspuffern (b₁ ... bₙ) geleitet werden, und daß das Schaltfeld weiterhin Einrichtungen (23) aufweist, die an den Ausgangspuffern angeschlossen sind, um eine neue Zelle zu bilden, indem der konvertierte Kopfteil und der nutzbare Abschnitt (12) der Zelle kombiniert werden, die von dem gemeinsamen Speicher (24) auf der Basis der gemeinsamen Speicheradresse gelesen wird, und um anschließend die neue Zelle an die eine oder die mehreren Ausgangsleitungen zu übertragen.

## Revendications

1. Procédé de commutation pour un champ de commutation basé sur une mémoire commune, dans lequel
- une pluralité de portes d'entrée (a₁... aₙ) reçoivent des cellules (10) comprenant chacune un en-tête (11) et une portion de contenu utile (12) ;
- l'en-tête (11) et la portion de contenu utile (12) d'une cellule arrivant au champ de commutation sont séparés l'un de l'autre, et ainsi des opérations de conversion d'en-tête pour extraire des informations d'acheminement pour la liaison suivante sont exécutées relativement à l'en-tête (11), et la portion de contenu utile (12) est écrite dans une mémoire commune (24) ; et
- chaque cellule (10) est transmise par l'intermédiaire d'une ou plusieurs portes de sortie (c₁... cₙ) à une ou plusieurs lignes de sortie,
caractérisé en ce que des paquets, consistant en un nouvel en-tête obtenu à partir de la conversion d'en-tête et en l'adresse de mémoire commune dans laquelle la portion de contenu utile (12) a été écrite, sont commutés vers un bus en partage de temps (22), branché en parallèle avec la mémoire commune (24), qui achemine chaque paquet à des tampons de sortie (b1... bn) d'une manière connue en soi, et que quand chaque cellule doit être transmise, une portion correspondante de contenu utile (12) est lue dans la mémoire commune (24) sur la base de l'adresse de mémoire commune, ladite portion de contenu utile (12) et ledit nouvel en-tête sont combinés dans une nouvelle cellule, et la nouvelle cellule est transmise auxdites une ou plusieurs lignes de sortie.

2. Procédé selon la revendication 1, caractérisé en ce qu'un paquet consistant en le nouvel en-tête obtenu par la conversion d'en-tête et l'adresse de mémoire du contenu utile (12) est commuté vers le bus en partage de temps (22) à partir d'un circuit de copie d'adresse (26) dans lequel une copie d'une adresse entrante en une pluralité d'adresses sortantes est effectuée en plus des opérations de conversion d'en-tête, et ainsi une pluralité de paquets ayant tous la même adresse de mémoire commune sont commutés vers le bus en partage de temps (22) pour une cellule entrante.

3. Champ de commutation comprenant
- une pluralité de portes d'entrée (a₁... aₙ), qui reçoivent des cellules (10) comprenant chacune un en-tête (11) et une portion de contenu utile (12) ;
- une pluralité de portes de sortie (c₁... cₙ), par l'intermédiaire desquelles lesdites cellules sont transmises à une ou plusieurs lignes de sortie;
- des moyens de conversion d'en-tête (25) pour une conversion de l'en-tête (11) d'une cellule (10) entrante afin d'extraire des informations d'acheminement pour la liaison suivante ; et
- une mémoire commune (24) pour stocker la portion de contenu utile (12) de la cellule (10),
caractérisé en ce qu'un bus connu en partage de temps (22) est branché en parallèle avec ladite mémoire commune (24), de sorte que des paquets, consistant en l'en-tête converti pour la nouvelle liaison de la cellule et en l'adresse de mémoire commune dans laquelle la portion de contenu utile (12) a été écrite, sont acheminés à travers lui vers des tampons de sortie (b₁... bₙ), et que le champ de commutation comprend en outre des moyens (23), reliés aux tampons de sortie, pour constituer une nouvelle cellule en combinant ledit en-tête converti et la portion de contenu utile (12) de la cellule qui est lue dans la mémoire commune (24) sur la base de l'adresse de mémoire commune, et pour transmettre ensuite ladite nouvelle cellule auxdites une ou plusieurs lignes de sortie.
